# EUROPÄISCHE PATENTSCHRIFT

(11) **EP 3 479 141 B1**
(45) Veröffentlichungstag und Bekanntmachung des Hinweises auf die Patenterteilung: **17.04.2024**
(21) Anmeldenummer: 17733752.4
(22) Anmeldetag: 14.06.2017
(51) Int. Cl.: G01S 17/86, G01S 17/08, G01S 7/51

(54) **VERFAHREN ZUM BETRIEB EINES LASERENTFERNUNGSMESSGERÄTS**
METHOD FOR OPERATING A LASER DISTANCE MEASURING DEVICE
PROCÉDÉ PERMETTANT DE FAIRE FONCTIONNER UN TÉLÉMÈTRE LASER

(30) Priorität: 29.06.2016 DE 102016211742
(43) Veröffentlichungstag der Anmeldung: 08.05.2019
(73) Patentinhaber: Robert Bosch GmbH, 70442 Stuttgart (DE)
(72) Erfinder: HAEBERLE, Heinz, 70374 Stuttgart (DE); SKULTETY-BETZ, Uwe, 70771 Leinfelden-Echterdingen (DE)
(86) Internationale Anmeldenummer: PCT/EP2017/064493
(87) Internationale Veröffentlichungsnummer: WO 2018/001730

(56) Entgegenhaltungen:
- EP-A1- 2 669 707
- EP-A2- 2 918 972
- US-A1- 2015 332 500

## Beschreibung

### Stand der Technik

Die vorliegende Erfindung betrifft ein Verfahren zum Betrieb eines Laserentfernungsmessgeräts, insbesondere eines handgehaltenen Laserentfernungsmessgeräts.

Es sind bereits Verfahren zum Betrieb von Laserentfernungsmessgeräten vorgeschlagen worden, beispielsweise in DE 10 2012 214 880 A1, in EP 2669707 A1, in EP 2 918 972 A2 sowie in US 2015/332500 A1.

### Offenbarung der Erfindung

Das vorgeschlagene Verfahren zum Betrieb eines Laserentfernungsmessgeräts, insbesondere eines handgehaltenen Laserentfernungsmessgeräts, geht aus von einem Verfahren, bei dem mit einer Laserentfernungsmesseinheit des Laserentfernungsmessgeräts eine erste Entfernung zu einem ersten Zielpunkt durch Aussenden eines Laserstrahls in einer ersten Entfernungsmessrichtung ermittelt wird und anschließend zumindest eine zweite Entfernung zu einem zweiten, anvisierten Zielpunkt ermittelt wird. Die zweite Entfernung wird durch Aussenden eines Laserstrahls in einer zweiten Entfernungsmessrichtung ermittelt.

Erfindungsgemäß wird ein mittels einer Kamera des Laserentfernungsmessgeräts aufgenommenes Bild zumindest der Zielumgebung des zweiten Zielpunkts auf einem Display des Laserentfernungsmessgeräts ausgegeben, wobei mit dem Bild überlagert zumindest ein Teil einer Verbindungslinie dargestellt wird, die den ersten Zielpunkt und den zweiten Zielpunkt in dem ausgegebenen Bild verbindet.

Die Laserentfernungsmesseinheit des Laserentfernungsmessgeräts ist dazu vorgesehen, einen zeitlich modulierten Strahl, insbesondere einen Laserstrahl, in Richtung auf ein Zielobjekt hin, dessen Entfernung zu dem Messgerät ermittelt werden soll, auszusenden. Derjenige Punkt, an dem der ausgesendete Laserstrahl auf das Zielobjekt trifft, wird im Folgenden Zielpunkt genannt. Die Richtung im dreidimensionalen Raum, in die der Laserstrahl auf das Zielobjekt hin ausgesendet wird, wird im Folgenden als Entfernungsmessrichtung bezeichnet. Bezogen auf das Laserentfernungsmessgerät ist die Entfernungsmessrichtung durch die Konstruktion definiert, insbesondere durch die Anordnung der Laserentfernungsmesseinheit in einem Gehäuse des Laserentfernungsmessgeräts. Die Laserentfernungsmesseinheit weist zumindest eine Sendevorrichtung zum Aussenden von Laserstrahlung auf. Die Begriffe "Laserstrahlung" und "Laserstrahl" werden im Folgenden synonym verwendet.

Ein von dem angepeilten Zielobjekt reflektierter oder gestreuter, rücklaufender Strahl wird von dem Laserentfernungsmessgerät, insbesondere von einer Sensorvorrichtung der Laserentfernungsmesseinheit, zumindest teilweise detektiert und zur Ermittlung der zu messenden Entfernung in Entfernungsmessrichtung verwendet. Die Sensorvorrichtung ist zum Detektieren von rücklaufender Laserstrahlung ausgebildet, wobei unter der "Sensorvorrichtung" zumindest ein Detektorelement verstanden werden soll, das abhängig von einer auftreffenden Lichtintensität ein Detektionssignal liefert. Unter "Detektorelement" werden strahlungsempfindliche, insbesondere lichtempfindliche Elemente wie Fotodioden, beispielsweise Pin-Dioden oder Avalanche-Fotodioden (APD), aber auch (modulierte) CCD-Chips und CMOS-Pixel verstanden. In einer Ausführungsform des Laserentfernungsmessgerätes wird das zumindest eine Detektorelement durch eine Single-Photon-Avalanche-Diode (SPAD) gebildet, bevorzugt durch eine Mehrzahl von Single-Photon-Avalanche-Dioden.

Aus einem zwischen der ausgesendeten Laserstrahlung und der von der Oberfläche des Zielobjekts reflektierten Laserstrahlung durchgeführten Phasenvergleich kann eine Lichtlaufzeit ermittelt und über die Lichtgeschwindigkeit die gesuchte Entfernung zwischen dem Laserentfernungsmessgerät und dem Zielobjekt, insbesondere zwischen dem Laserentfernungsmessgerät und dem Zielpunkt in entsprechender Entfernungsmessrichtung, bestimmt werden. Ein typischer Messbereich des Laserentfernungsmessgeräts liegt in einem Entfernungsbereich von wenigen Zentimetern bis zu mehreren hundert Metern. Die ermittelte Entfernung, d.h. der Entfernungsmesswert, wird anschließend mittels einer Auswerte- oder Steuervorrichtung des Laserentfernungsmessgeräts weiter verarbeitet und/oder unter Verwendung einer Ausgabevorrichtung wie einem Displays an einen Benutzer des Laserentfernungsmessgeräts ausgegeben.

In einer Ausführungsform ist das Laserentfernungsmessgerät als ein handgehaltenes Messgerät realisiert, das ohne Zuhilfenahme einer Transport- und/oder Haltevorrichtung lediglich mit den Händen, bevorzugt mit einer Hand, geführt werden kann. Dazu beträgt die Gesamtmasse des Laserentfernungsmessgeräts insbesondere weniger als 500g, bevorzugt weniger als 300g, besonders bevorzugt weniger als 200 g. In einer Ausführungsform des Laserentfernungsmessgeräts sind alle Komponenten des Messgeräts in einem die Komponenten im Wesentlichen umschließenden Gehäuse untergebracht. Insbesondere beträgt die Länge der längsten Seite dieses Gehäuses weniger als 30cm, bevorzugt weniger als 20cm, besonders bevorzugt weniger als 15cm.

Das Laserentfernungsmessgerät weist erfindungsgemäß eine, insbesondere in Entfernungsmessrichtung ausgerichtete, Kamera zur Aufnahme zumindest eines Bildes einer Zielumgebung eines jeweilig anvisierten Zielpunkts auf. Die Kamera kann in einer Ausführungsform als ein CCD-Chip oder ein anderweitiges, insbesondere im visuellen Spektrum sensitives, Bilderfassungsmittel realisiert sein. Mittels der Kamera kann, insbesondere gleichzeitig zu einer Vermessung der Entfernung zwischen dem Laserentfernungsmessgerät und einem Zielpunkt auf dem Zielobjekt, ein Bild zumindest der Zielumgebung des Zielpunkts aufgenommen werden. Die Zielumgebung um den entsprechenden Zielpunkt ist dabei insbesondere über denjenigen Raum- oder Erfassungswinkel definiert, aus dem mittels der Optik der Kamera Licht gesammelt und zu einem Bild umgewandelt wird. In einer Ausführungsform kann das Bild der Zielumgebung eines Zielpunktes unter Verwendung strahlformender und/oder strahllenkender optischer Elemente, insbesondere beispielsweise unter Verwendung von Linsen, diffraktiven Elemente, Spiegel oder dergleichen, verändert, insbesondere verkleinert oder vergrößert werden. Alternativ oder zusätzlich hierzu kann das Bild der Zielumgebung eines Zielpunktes auch softwaregestützt verändert, insbesondere vergrößert oder verkleinert, werden.

Es sei an dieser Stelle darauf hingewiesen, dass auch ein Teil des von der Zielumgebung eines Zielpunktes aufgenommenen Bilds selbst wieder ein Bild der Zielumgebung des Zielpunktes darstellt. Somit gilt im Rahmen dieser Schrift jeder Teilausschnitt eines Bilds von der Zielumgebung eines Zielpunktes auch selbst als ein Bild der Zielumgebung des Zielpunktes.

Ferner weist das Laserentfernungsmessgerät eine Recheneinheit auf, die zur Berechnung einer Entfernung aus einer Entfernungsmessung mittels der Laserentfernungsmesseinheit vorgesehen und eingerichtet ist. Darüber hinaus ist die Recheneinheit auch zur Berechnung eines Abstands, insbesondere eines indirekt zu ermittelnden Abstands, aus Bilddaten zumindest eines aufgenommenen Bildes vorgesehen und eingerichtet. Insbesondere lassen sich mittels der Kamera aufgenommene Bilddaten unter Verwendung der Recheneinheit bezüglich eines Raumwinkels auswerten. Dies bedeutet, dass insbesondere jedes Pixel eines mittels der Kamera aufgenommenen Bildes einem bekannten, von der Winkelauflösung der verwendeten Kameraoptik abhängigen Raumwinkel entspricht. Dieser Raumwinkel kann, sofern die Distanz zu dem Zielobjekt bekannt ist, in eine Distanz umgerechnet werden, beispielsweise mittels einer trigonometrischen Funktion. Somit lassen sich aus diesen Bilddaten indirekt Distanzen ermitteln bzw. errechnen, die einem Abstand von auf der Oberfläche des Zielobjekts befindlichen Punkten zugeordnet werden können. Indem aus den Bilddaten der Pixel-Abstand zwischen den beiden in Pixeln abgebildeten Endpunkten des indirekt zu bestimmenden Abstands ermittelt wird, kann über die bekannte Winkelauflösung eine prinzipielle Umrechnung des Pixel-Abstands in einen tatsächlichen Abstand der Zielpunkte auf der Oberfläche erfolgen.

Es sei an dieser Stelle darauf hingewiesen, dass im Rahmen dieser Schrift der Begriff "Entfernung" eine Distanz zwischen dem Laserentfernungsmessgerät und dem Zielobjekt bezeichnet, während der Begriff "Abstand" eine Distanz zweier auf dem Zielobjekt befindlicher Punkte bezeichnet, also die indirekt zur ermittelnde Distanz bezeichnet. Der Abstand wird dabei berechnet und entspricht der Länge der kürzesten Verbindungslinie zwischen den beiden Punkten auf dem Zielobjekt, auch wenn diese Verbindungslinie durch das Zielobjekt hindurch verläuft. Der Abstand berücksichtigt daher keine Oberflächenstruktur, wie beispielsweise Vorsprünge, Senken oder dergleichen.

In einer Ausführungsform der Kamera ist diese als eine Fix-Fokus-Kamera ausgeführt, d. h. die Kameraoptik weist eine unveränderbare, fixe Vergrößerung bzw. Zoom-Stufe auf. In einer alternativen Ausführungsform der Kamera kann diese eine veränderliche Zoom-Stufe, d.h. eine Zoom-Funktionalität, aufweisen. Bevorzugt sind für die verschiedenen Zoom-Stufen zugehörige Winkelverzerrungen bekannt und im Gerät hinterlegt.

Das Laserentfernungsmessgerät weist außerdem ein Display auf, wobei mittels des Displays ein mit der Kamera erfasstes Bild oder ein Teilbereich eines Bildes darstellbar ist. Dabei ist im Betrieb des Laserentfernungsmessgerätes mit dem Bild überlagert zumindest ein Teil einer Verbindungslinie darstellbar, die den ersten Zielpunkt und den zweiten Zielpunkt in dem ausgegebenen Bild, insbesondere dem ausgegebenen Teilbereich des Bilds, verbindet.

Das erfindungsgemäße Verfahren zum Betrieb des Laserentfernungsmessgeräts findet beispielsweise Anwendung in einem Szenario, in dem ein Benutzer des Laserentfernungsmessgeräts eine indirekte Abstandsmessung durchführen möchte. Eine derartige, indirekte Abstandsmessung kann beispielsweise dann durchgeführt werden, wenn zwischen den beiden Zielpunkten, zwischen denen der tatsächliche Abstand bestimmt werden soll, keine Sichtverbindung besteht und/oder einer oder beide dieser Zielpunkte für den Benutzer des Laserentfernungsmessgeräts unerreichbar sind.

In einem Anwendungsbeispiel könnte beispielsweise der Benutzer des Laserentfernungsmessgeräts daran interessiert sein, einen tatsächlichen Abstand zwischen zwei Fenstern in einer Hausfassade zu bestimmen, wobei die Fenster sich in einer Höhe befinden, die es dem Benutzer unmöglich macht, die jeweiligen Endpunkte der gewünschten (indirekten) Abstandsmessung direkt zu erreichen.

Das vorgeschlagene Verfahren geht davon aus, dass der Benutzer des Laserentfernungsmessgeräts zunächst eine erste Entfernungsmessrichtung im dreidimensionalen Raum festlegt, indem der Benutzer zunächst einen ersten Zielpunkt - d.h. den Startpunkt der indirekten Abstandsmessung zwischen den Fenstern - anvisiert. Das Anvisieren erfolgt beispielsweise, indem der Benutzer auf dem Display des Laserentfernungsmessgeräts ein Bild (oder Teilbild) der (anvisierten) Zielumgebung beobachtet und den in Entfernungsmessrichtung ausgesendeten Laserstrahl durch Ausrichtung des Laserentfernungsmessgeräts im Raum mit dem gewünschten ersten Zielpunkt zur Deckung bringt. In einer Ausführungsform des Verfahrens bestätigt der Benutzer die erfolgte Anvisierung des ersten Zielpunktes durch eine Benutzereingabe. Folgend auf die Benutzereingabe wird daraufhin eine erste Entfernung in der ersten Entfernungsmessrichtung zu dem ersten Zielpunkt gemessen und ausgewertet. Im zeitlichen Zusammenhang, insbesondere zeitgleich mit dem Messen der ersten Entfernung, erfasst die Kamera ein erstes Bild der Zielumgebung des ersten Zielpunktes.

Anschließend visiert der Benutzer des Laserentfernungsmessgeräts den zweiten Zielpunkt an - d.h. den Endpunkt der indirekten Abstandsmessung. Nach dem Anvisieren oder alternativ auch kontinuierlich während des Anvisierens des zweiten Zielpunktes, insbesondere nach einer erneuten Benutzereingabe, erfolgt eine zweite Entfernungsmessung zwischen dem Laserentfernungsmessgerät und dem zweiten anvisierten Zielpunkt in der nun vorliegenden zweiten Entfernungsmessrichtung. Im zeitlichen Zusammenhang, insbesondere zeitgleich mit dem Messen der zweiten Entfernung, erfasst die Kamera ein zweites Bild der Zielumgebung des zweiten Zielpunktes. Ein mittels der Kamera des Laserentfernungsmessgeräts aufgenommenes Bild zumindest der Zielumgebung des zweiten Zielpunktes wird auf dem Display des Laserentfernungsmessgeräts ausgegeben. Überlagert mit diesem Bild, oder zumindest überlagert mit einem Teil dieses Bilds, wird zumindest ein Teil einer Verbindungslinie dargestellt, die den ersten Zielpunkt und den zweiten Zielpunkt in dem ausgegebenen Bild verbindet. Diese Verbindungslinie stellt die indirekte Abstandsmessung grafisch dar. Auf diese Weise kann der Benutzer dem ausgegebenen Bild diejenige Verbindungslinie zwischen dem ersten und dem zweiten Zielpunkt entnehmen, die denjenigen Abstand in dem Bild repräsentiert, der mittels der indirekten Längenmessung bestimmt wird bzw. wurde.

Vorteilhaft kann auf diese Weise eine besonders intuitive und somit einfache Bedienung des Laserentfernungsmessgeräts durch den Benutzer realisiert werden. Eine Fehlbedienung des Laserentfernungsmessgeräts, insbesondere eine falsch durchgeführte indirekte Abstandsmessung, kann vermieden werden.

In einer Ausführungsform des erfindungsgemäßen Verfahrens zum Betrieb des Laserentfernungsmessgeräts wird der Anfangspunkt und der Endpunkt der darzustellenden Verbindungslinie unter Verwendung einer Serie von Bildern berechnet, die zumindest ein erstes Bild einer Zielumgebung des ersten Zielpunkts und zumindest ein zweites Bild einer Zielumgebung des zweiten Zielpunkts aufweist, wobei zumindest benachbarte Bilder jeweils mindestens einen gemeinsamen Bildbereich aufweisen.

Insbesondere können das erste Bild der Zielumgebung des ersten Zielpunkts und das zweite Bild der Zielumgebung des zweiten Zielpunkts identisch sein. In diesem Fall werden die Zielumgebung des ersten Zielpunkts und die Zielumgebung des zweiten Zielpunkts in einem einzigen Bild wiedergegeben.

In einem allgemeineren Fall wird das erste Bild von der Zielumgebung des ersten Zielpunkts nach Anvisieren des ersten Zielpunkts aufgenommen. Anschließend wird das Laserentfernungsmessgerät durch den Benutzer derart im Raum bewegt, bis der zweite Zielpunkt anvisiert ist. Während dieser Bewegung des Laserentfernungsmessgeräts im Raum werden eine Serie weiterer Bilder aufgenommen. Mit Anvisieren des zweiten Zielpunkts wird zumindest ein zweites Bild der Zielumgebung des zweiten Zielpunkts aufgenommen. Aus diesen Bildern, d.h. dem ersten Bild der Zielumgebung des ersten Zielpunkts, dem zweiten Bild der Zielumgebung des zweiten Zielpunkts, sowie der Serie von Bildern, die zwischen Anvisieren des ersten Zielpunktes und Anvisieren des zweiten Zielpunktes aufgenommen wurden, können die Informationen zur indirekten Abstandsmessung ermittelt werden. Dazu werden die Bilder zunächst mittels einer Bildverarbeitungsroutine durch die Recheneinheit in Beziehung zueinander gesetzt. Die benachbarten Bilder der Serie von Bildern weisen dabei jeweils einen gemeinsamen Bildbereich auf. Unter Verwendung dieser gemeinsamen Bildbereiche, auch "Überlappbereiche" genannt, über die die Bilder zueinander in Beziehung gesetzt werden, wird ein zusammengefügtes Gesamtbild berechnet. Dieser Vorgang ist als "Stitching" aus der Bildverarbeitung bekannt. Der Anfangspunkt und der Endpunkt der auf dem Display darzustellenden Verbindungslinie können nun unter Verwendung dieses zusammengesetzten Gesamtbildes aus den Pixelkoordinaten eines dem Gesamtbild zu Grunde liegenden oder zu Grunde gelegten Pixelgitters bestimmt werden. Auf diese Weise kann eine besonders einfache Bestimmung des Anfangs- und des Endpunktes der darzustellenden Verbindungslinie unter Verwendung der mittels der Kamera aufgenommenen Bilder realisiert werden.

In der erfindungsgemäßen Ausführungsform des Verfahrens zum Betrieb des Laserentfernungsmessgeräts erfolgt die Darstellung des Bildes überlagert mit der Verbindungslinie zwischen dem ersten Zielpunkt und dem zweiten Zielpunkt in Echtzeit synchron zu einer Bewegung des Laserentfernungsmessgeräts.

Auf diese Weise wird während der Bewegung des Laserentfernungsmessgeräts durch den Benutzer stets ein aktuelles Bild der zu dem gegebenen Zeitpunkt anvisierten Zielumgebung des zweiten Zielpunkts ausgegeben. Gleichzeitig mit der aktualisierten Ausgabe des Bildes wird auch die Verbindungslinie zwischen dem ersten Zielpunkt und dem zweiten Zielpunkt aktualisiert dargestellt.

Unter "in Echtzeit synchron zu einer Bewegung des Laserentfernungsmessgeräts" soll in diesem Zusammenhang insbesondere verstanden werden, dass die Verarbeitungsgeschwindigkeit der Recheneinheit derart hoch ist, dass sich eine Umpositionierung des Laserentfernungsmessgeräts im Raum durch den Benutzer unmittelbar in einer Änderung des dargestellten Bildes, insbesondere überlagert mit der Verbindungslinie, auswirkt. Auf diese Weise kann der Benutzer des Laserentfernungsmessgeräts eine mit dem Laserentfernungsmessgerät ausgeführte Bewegung im Raum direkt, d.h. "synchron", einer Änderung des ausgegebenen Bildes samt der Verbindungslinie zuordnen.

Vorteilhaft ist die Darstellung des Bildes überlagert mit der Verbindungslinie auf dem Display lediglich durch eine geräteinterne Verarbeitungsrate begrenzt, d.h. insbesondere durch geräteinterne Signalübertragungsgeschwindigkeiten sowie eine Auswertegeschwindigkeit der Recheneinheit. Die Recheneinheit ist insbesondere dazu vorgesehen, jeweils mit der Kamera aktuell aufgenommene und übermittelte Bilddaten von der Kamera anzunehmen. Dabei ist die Geschwindigkeit, mit der Bilddaten von der Recheneinheit angenommen werden, vorteilhaft an eine Verarbeitungsgeschwindigkeit der Recheneinheit angepasst. Somit bleiben Bilddaten, die von der Recheneinheit nicht unmittelbar verarbeitet werden können, unberücksichtigt.

Durch eine hohe Verarbeitungsrate kann bei dem Benutzer des Laserentfernungsmessgeräts der Eindruck entstehen, dass Bilddaten für einen mit dem Laserentfernungsmessgerät anvisierten Zielbereich, insbesondere einer Zielumgebung eines Zielpunkts, unmittelbar ausgewertet und die Verbindungslinie zwischen dem ersten Zielpunkt und dem anvisierten zweiten Zielpunkt unmittelbar dargestellt wird. Insbesondere vermittelt das Laserentfernungsmessgerät dem Benutzer den Eindruck, dass die Verarbeitung der Bilddaten sowie die Berechnung der darzustellenden Verbindungslinie somit zumindest im Wesentlichen verzögerungsfrei erfolgt. Unter einer Darstellung des Bilds überlagert mit der Verbindungslinie "in Echtzeit" ist dann auszugehen, wenn die geräteinterne Verarbeitungsdauer bis zur fertiggestellten Darstellung des Bilds überlagert mit der Verbindungslinie insbesondere weniger als zwei Sekunden, bevorzugt weniger als eine Sekunde, besonders bevorzugt weniger als 0,5 Sekunden beträgt. Dadurch kann der Benutzer des Laserentfernungsmessgeräts besonders schnell, verzögerungsfrei und somit sicher erkennen, zwischen welchen Zielpunkten die Verbindungslinie gegenwärtig berechnet wird. Vorteilhaft kann somit ein besonders effizientes und intuitiv bedienbares Laserentfernungsmessgerät mit hohem Bedienkomfort bereitgestellt werden.

In einer Ausführungsform des Verfahrens zum Betrieb des Laserentfernungsmessgeräts wird der Abstand des ersten Zielpunkts zum zweiten Zielpunkt unter Verwendung eines aus zueinander in Beziehung gesetzten Bildern ermittelten Pixel-Abstands des ersten Zielpunkts zum zweiten Zielpunkt sowie unter Verwendung der ersten Entfernung berechnet.

Vorteilhaft kann aus den Messgrößen der ersten Entfernung und dem Pixel-Abstand des ersten Zielpunkts zum zweiten Zielpunkt der tatsächliche, indirekte Abstand des ersten Zielpunkts zum zweiten Zielpunkt auf dem Zielobjekt unter Anwendung einer trigonometrischen Funktion (beispielsweise des Cosinussatzes) berechnet werden. Der Pixel-Abstand des ersten Zielpunkts zum zweiten Zielpunkt wird dabei aus den in zueinander in Beziehung gesetzten Bildern ermittelt. Auf diese Weise kann eine besonders schnelle und einfache, insbesondere ohne aufwändige Recheneinheit durchführbare Berechnung des indirekten Abstands des ersten Zielpunkts zum zweiten Zielpunkt auf dem Zielobjekt durchgeführt werden.

In einer Ausführungsform des Verfahrens zum Betrieb des Laserentfernungsmessgeräts wird der Abstand des ersten Zielpunkts zum zweiten Zielpunkt unter Verwendung eines aus zueinander in Beziehung gesetzten Bildern ermittelten Pixel-Abstands des ersten Zielpunkts zum zweiten Zielpunkt sowie unter Verwendung der ersten Entfernung und der zweiten Entfernung berechnet.

Ebenfalls kann diese Berechnung unter Anwendung einer trigonometrischen Funktion, beispielsweise des Cosinussatzes, erfolgen. Unter Verwendung der zweiten Entfernung zur Berechnung des tatsächlichen, indirekten Abstands des ersten Zielpunkts zum zweiten Zielpunkt auf dem Zielobjekt kann vorteilhaft eine besonders genaue Bestimmung dieses Abstands erfolgen.

Ferner können in einer Ausführungsform des Verfahrens zum Betrieb des Laserentfernungsmessgeräts auch weitere Raumdaten, insbesondere Raumwinkeldaten, zur Berechnung des indirekten Abstands des ersten Zielpunkts zum zweiten Zielpunkt auf dem Zielobjekt verwendet werden. Diese Raumdaten können auf einfache Weise unter Verwendung einer Inertialsensorik erhalten werden. Die Inertialsensorik dient dabei der Erfassung einer gegenwärtigen Ausrichtung des Laserentfernungsmessgeräts. Beispielsweise kann eine Inertialsensorik vorgesehen sein, mittels der eine Drehung des Laserentfernungsmessgeräts in beliebige Richtung detektiert und quantitativ ausgewertet werden kann. Alternativ oder zusätzlich kann dazu ein Sensor aus einer Gruppe von Sensoren verwendet werden, die zumindest neigungs-, winkel-, abstands-, translations-, beschleunigungs- sowie drehratensensitive Sensoren umfasst.

Vorteilhaft lässt sich die Genauigkeit, mit der der Abstand des ersten Zielpunkts zum zweiten Zielpunkt auf dem Zielobjekt indirekt bestimmt wird, steigern. Insbesondere können auch translatorische Bewegungen des Laserentfernungsmessgeräts, die während der Ausrichtung des Laserentfernungsmessgeräts im Raum zum Anvisieren des zweiten Zielpunkts auftreten können, in der Berechnung des Abstands des ersten Zielpunkts zum zweiten Zielpunkt auf dem Zielobjekt berücksichtigt werden.

In einer Ausführungsform des Verfahrens zum Betrieb des Laserentfernungsmessgeräts wird der Abstand des ersten Zielpunkts zum zweiten Zielpunkt durch eine Länge der dargestellten Verbindungslinie zwischen dem ersten Zielpunkt und dem zweiten Zielpunkt auf dem Display repräsentiert und dargestellt, insbesondere in Echtzeit synchron zu einer Bewegung des Laserentfernungsgeräts auf dem Display dargestellt, vorzugsweise als numerischer Wert dargestellt.

Unter "auf dem Display darstellen" ist insbesondere zu verstehen, dass die Länge unter Verwendung des Displays an den Benutzer des Laserentfernungsmessgeräts ausgegeben wird. Beispielsweise kann diese Ausgabe unter Darstellung der Länge als numerischer Wert im Bild (oder im Teilbild), das die zweite Zielumgebung des zweiten Zielpunkts darstellt, ausgegeben werden. Alternativ oder zusätzlich kann die Länge als numerischer Wert in einem separat von dem Bild dargestellten Bereich im Display dargestellt werden. Auf diese Weise kann der Benutzer des Laserentfernungsmessgeräts den indirekt zu bestimmenden Abstand des ersten Zielpunkts zum zweiten Zielpunkt auf besonders einfache und intuitive Weise erfassen.

Mit der Darstellung der Länge der Verbindungslinie in Echtzeit synchron zu einer Bewegung des Laserentfernungsmessgeräts kann der Benutzer die in Folge der Umpositionierung des Laserentfernungsmessgeräts im Raum erfolgte Änderung des tatsächlichen (indirekt bestimmten) Abstands zwischen dem ersten Zielpunkt und dem zweiten, anvisierten Zielpunkt auf dem Zielobjekt unmittelbar verfolgen.

In einer Ausführungsform des Verfahrens wird die Ausgabe des Bilds zumindest der Zielumgebung des zweiten Zielpunkts überlagert mit der Verbindungslinie zwischen dem ersten Zielpunkt und dem zweiten Zielpunkt und/oder die dargestellte Länge der Verbindungslinie auf dem Display in Folge einer Benutzereingabe eingefroren.

Unter einer Benutzereingabe sind insbesondere von dem Benutzer durchgeführte Betätigungen der Bedienelemente des Laserentfernungsmessgeräts zu verstehen. Beispielsweise kann ein bestimmtes Bedienelement speziell dazu vorgesehen sein, bei dessen Betätigung die Ausgabe des Bilds und/oder die Ausgabe der dargestellten Länge der Verbindungslinie auf dem Display einzufrieren. "Einfrieren" bedeutet dabei insbesondere, dass sich die Ausgabe des Bildes (oder Teilbildes) und/oder der dargestellten Länge der Verbindungslinie auf dem Display bei einer weiteren Bewegung des Laserentfernungsmessgeräts im Raum nicht mehr ändert.

Insbesondere kann die Benutzereingabe infolge der Auslösung einer weiteren Entfernungsmessung, insbesondere der Auslösung der Entfernungsmessung in der zweiten Entfernungsmessrichtung zum zweiten Zielpunkt, realisiert sein. Auf diese Weise kann ein besonders intuitiv verständliches Verfahren zum Betrieb des Laserentfernungsmessgeräts angegeben werden: Der Benutzer wird nach Auslösen der ersten Entfernungsmessung zum ersten Zielpunkt das Laserentfernungsmessgerät im Raum bewegen, um den zweiten Zielpunkt auf dem Zielobjekt anzuvisieren. Dabei beobachtet er das synchron zu seiner Bewegung des Laserentfernungsmessgeräts von der zweiten Zielumgebung des zweiten Zielpunkts ermittelte Bild auf dem Display sowie die gleichzeitig ausgegebene Länge der dargestellten Verbindungslinie. Diese Länge der dargestellten Verbindungslinie stellt den tatsächlichen, indirekt bestimmten Abstand des ersten Zielpunkts zum zweiten, anvisierten Zielpunkt dar. Hat der Benutzer den zweiten Zielpunkt in Folge der Anvisierung gefunden, kann er durch Auslösung einer zweiten Entfernungsmessung zwischen dem Messgerät und dem zweiten Zielpunkt die Ausgabe des Bilds und/oder der dargestellten Länge der Verbindungslinie auf dem Display einfrieren. Die ausgegebene Länge entspricht dem indirekt bestimmten Abstand des ersten Zielpunkts zum zweiten Zielpunkt auf dem Zielobjekt.

In einer Ausführungsform des Laserentfernungsmessgeräts wird die Verbindungslinie als ein untergliederter Maßstab dargestellt.

"Untergliedert" bedeutet, dass die Verbindungslinie in irgendeiner Form Regelmäßigkeiten aufweist, beispielsweise realisiert als Teilstriche, als Unterbrechungen in der Verbindungslinie, als Symbole, als numerische Werte oder dergleichen. Die Untergliederung des Maßstabs dient dem intuitiven Ablesen einer Länge der Verbindungslinie bereits ohne numerischen Wert. So ist es denkbar, dass die Verbindungslinie als ein Metermaßstab oder ein Zentimetermaßstab realisiert ist.

In einer vorteilhaften Ausführungsform ist die Untergliederung des Maßstabs variierbar, insbesondere automatisch variierbar, bevorzugt variierbar in Abhängigkeit der Länge der Verbindungslinie. So kann beispielsweise bei kurzen Abständen von wenigen Zentimetern die Untergliederung der Verbindungslinie mit einem Zentimetermaßstab erfolgen, während bei größeren Abständen bzw. größeren Längen der Verbindungslinie auf einen Metermaßstab für die Untergliederung gewechselt wird. Auf diese Weise kann der Benutzer des Laserentfernungsmessgeräts auch Abstände zwischen dem ersten Zielpunkt und dem zweiten Zielpunkt anhand der Untergliederung der Verbindungslinie auf intuitive und einfache Weise abschätzen.

In einer Ausführungsform des Verfahrens zum Betrieb des Laserentfernungsmessgeräts wird das Bild auf dem Display überlagert mit der Verbindungslinie zwischen dem ersten Zielpunkt und dem zweiten Zielpunkt in zumindest zwei verschiedenen Skalierungen ausgegeben.

Vorteilhaft kann somit dem Benutzer eine Darstellung des Bildes überlagert mit der Verbindungslinie in zwei unterschiedlichen Skalierungen, insbesondere Vergrößerungen, zur Verfügung gestellt werden. Beispielsweise kann eines der ausgegebenen Bilder eine kleine Skalierung aufweisen, beispielsweise unvergrößert ausgegeben werden, während die zweite Ausgabe des Bildes auf dem Display überlagert mit der Verbindungslinie eine Skalierung aufweist, die einer Vergrößerung des Bildes entspricht. Somit kann dem Benutzer des Laserentfernungsmessgeräts eine Orientierung beim Anvisieren des zweiten Zielpunktes erleichtert werden. Insbesondere kann der Benutzer unter Verwendung einer kleinen Skalierung des Bildes einen Überblick gewinnen, während er eine höher skalierte, insbesondere vergrößerte Darstellung des Bildes überlagert mit der Verbindungslinie nutzt, um eine genaue Ausrichtung des Laserentfernungsmessgeräts auf den zweiten Zielpunkt zu erreichen. In einer Ausführungsform des Verfahrens kann die Skalierung zumindest eines dargestellten Bildes (oder Teilbildes) durch den Benutzer des Laserentfernungsmessgeräts geändert werden.

In einer Ausführungsform des Verfahrens zum Betrieb des Laserentfernungsmessgeräts wird der erste und/oder der zweite Zielpunkt in dem dargestellten Bild markiert, insbesondere mittels eines Symbols markiert.

Auf diese Weise kann eine besonders intuitive Orientierung des Benutzers in dem auf dem Display dargestellten Bild erfolgen. Außerdem kann somit eine genaue Zuordnung vom ersten Zielpunkt und/oder zweiten Zielpunkt zu dem dargestellten Bild ermöglicht werden.

Ferner ist eine Funktion des Laserentfernungsmessgeräts denkbar, bei der die Verbindungslinie automatisch beim anvisieren eines zweiten Zielpunkts auf einem markanten Punkt, beispielsweise einem Vorsprung oder desgleichen, "einrastet", d.h. die Verbindungslinie automatisch zu diesem markanten Punkt als vermuteter zweiter Zielpunkt dargestellt wird. Auf diese Weise ist es möglich, schneller und genauer indirekt zu bestimmende Abstände zu ermitteln. In einer beispielhaften Ausführungsform des Laserentfernungsmessgeräts kann beispielsweise ein derartiger markanter Punkt durch einen sprunghaften Unterschied in nacheinander ermittelnten Entfernungen ermittelt werden, die beispielsweise auf einen Absatz, einen Vorsprung, eine Kante oder dergleichen schließen lassen.

Ferner wird ein erfindungsgemäßes Laserentfernungsmessgerät, insbesondere ein angehaltenes Laserentfernungsmessgerät, zur Durchführung des erfindungsgemäßen Verfahrens vorgeschlagen. Das Laserentfernungsmessgerät weist zumindest eine Laserentfernungsmesseinheit zum berührungslosen Messen einer Entfernung zu einem Zielpunkt, zumindest eine in Entfernungsmessrichtung ausgerichtete Kamera zur Aufnahme zumindest eines Bildes einer Zielumgebung des Zielpunkts, zumindest eine Recheneinheit zur Berechnung einer Entfernung aus einer Entfernungsmessung mittels der Laserentfernungsmesseinheit sowie zur Berechnung eines Abstands aus Bilddaten zumindest eines aufgenommenen Bildes, und ein Display, wobei mittels des Displays ein mit der Kamera erfasstes Bild überlagert mit zumindest einem Teil einer Verbindungslinie darstellbar ist, die den ersten Zielpunkt und den zweiten Zielpunkt in dem ausgegebenen Bild verbindet.

Wie bereits erwähnt, kann das mittels des Displays darstellbare oder dargestellte Bild auch ein Teilbild eines mit der Kamera erfassten Bildes sein.

In einer Ausführungsform des Laserentfernungsmessgeräts ist ein zweiteiliges Display und/oder zwei Displays zur Ausgabe des Bilds überlagert mit der Verbindungslinie zwischen dem ersten Zielpunkt und dem zweiten Zielpunkt in zwei verschiedenen Skalierungen vorgesehen.

### Zeichnungen

Die Erfindung ist anhand von in den Zeichnungen dargestellten Ausführungsbeispielen in der nachfolgenden Beschreibung näher erläutert. Die Zeichnungen, die Beschreibung und die Ansprüche enthalten zahlreiche Merkmale in Kombination. Der Fachmann wird die Merkmale zweckmäßiger Weise auch einzeln betrachten und zu sinnvollen weiteren Kombinationen zusammenfassen. Gleiche Bezugszeichen in den Figuren bezeichnen gleiche Elemente.

Es zeigen:
- Figur 1: eine perspektivische Ansicht einer Ausgestaltung des erfindungsgemäßen Laserentfernungsmessgeräts,
- Figur 2a: eine schematische Ansicht einer Ausgestaltung des erfindungsgemäßen Laserentfernungsmessgeräts, das sich in einem exemplarischen zu vermessenden Umfeld befindet,
- Figur 2b: eine schematische Ansicht der einer Auswertung des Abstands zu Grunde liegenden Geometrie einschließlich zweier mittels einer Kamera aufgenommener Bilder,
- Figur 3a,b: schematische Aufsichten auf eine Ausgestaltung des erfindungsgemäßen Laserentfernungsmessgeräts während der Durchführung des erfindungsgemäßen Verfahrens,
- Figur 4: Schematische Darstellung des erfindungsgemäßen Verfahrens in einem Verfahrensdiagramm
- Figur 5: Schematische Aufsicht auf eine alternative Ausgestaltung des erfindungsgemäßen Laserentfernungsmessgeräts während der Durchführung des erfindungsgemäßen Verfahrens

### Beschreibung der Ausführungsbeispiele

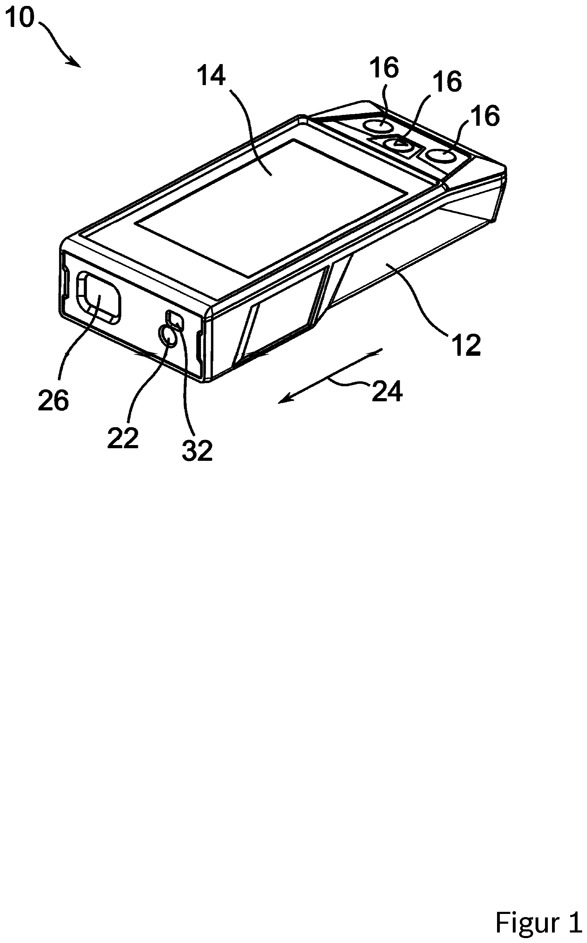

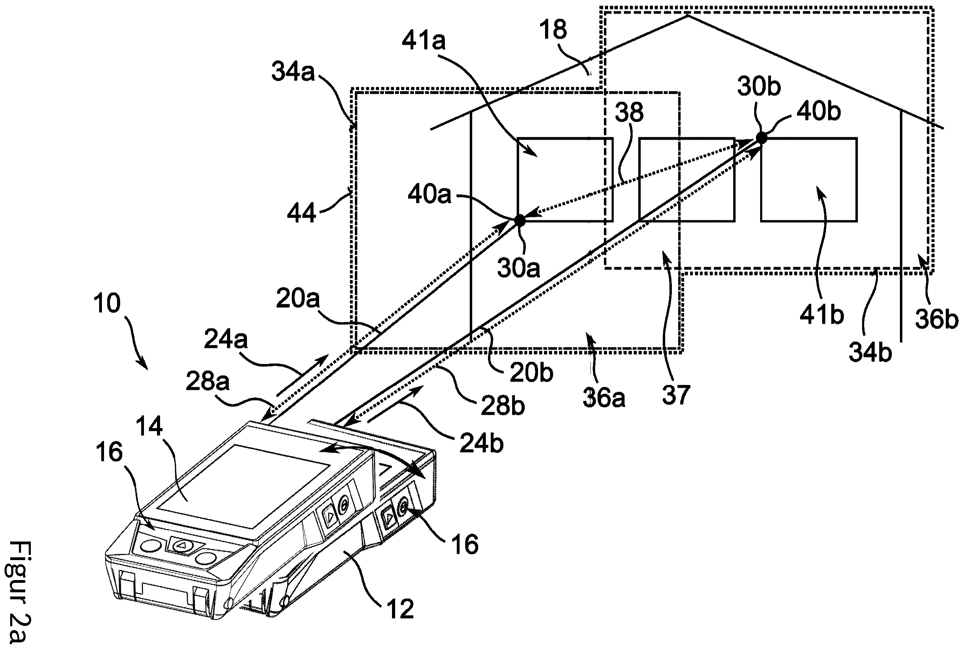

Figur 1 zeigt in perspektivischer Darstellung ein beispielhaft ausgeführtes, handgehaltenes Laserentfernungsmessgerät 10, das ein Gehäuse 12, ein Display 14 sowie Betätigungselemente 16 zum Ein- und Ausschalten des Laserentfernungsmessgeräts 10 und zum Starten bzw. Konfigurieren eines Messvorgangs aufweist. Zur Messung des Abstands des Laserentfernungsmessgeräts 10 zu einem Zielobjekt 18 (vgl. Figur 2a) wird im Betrieb des Laserentfernungsmessgeräts 10 parallele Laserstrahlung 20a,20b (vgl. Figur 2a) über eine Sendeoptik 22, die beispielsweise aus einem nicht näher dargestellten Linsensystem besteht, in Richtung des Zielobjekts 18 gesendet. Die Richtung, in die das Laserentfernungsmessgerät 10 Laserstrahlung emittiert, wird im Folgenden Entfernungsmessrichtung 24,24a,24b genannt. Die von einer Oberfläche des Zielobjekts 18 reflektierte Laserstrahlung (nicht näher dargestellt) wird über eine Empfangsoptik 26 auf eine nicht näher dargestellte Sensorvorrichtung geleitet und dort detektiert. Aus einem zwischen der ausgesendeten Laserstrahlung 20a,20b und der von der Oberfläche des entfernten Gegenstands 18 reflektierten Laserstrahlung durchgeführten Phasenvergleich kann eine Lichtlaufzeit ermittelt und über die Lichtgeschwindigkeit die gesuchte Entfernung 28a,28b zwischen Laserentfernungsmessgerät 10 und Zielobjekt 18 in Entfernungsmessrichtung 24,24a,24b bestimmt werden. Die Laserstrahlung 20a,20b ist in diesem Ausführungsbeispiel als rotes Laserlicht realisiert. Auf dem Zielobjekt 18 erzeugt die emittierte Laserstrahlung 20a,20b einen projizierten Laserpunkt, den sogenannten Zielpunkt 30a,30b.

Erfindungsgemäß weist das Laserentfernungsmessgerät 10 eine Kamera 32 auf, die zur Aufnahme zumindest eines Bildes 34a,34b einer Zielumgebung 36a,36b des Zielpunkts 30a,30b vorgesehen ist. Die Kamera 32 ist dabei in dem Laserentfernungsmessgerät 10 derart untergebracht, insbesondere in dem Gehäuse 12 des Laserentfernungsmessgeräts 10 derart untergebracht, dass sie in Entfernungsmessrichtung 24 ausgerichtet ist. Somit ist die Kamera 32 bezogen auf das Gehäuse 12 ortsfest in dem Gehäuse 12 untergebracht.

Das Laserentfernungsmessgerät 10 weist zu dessen Energieversorgung eine nicht näher dargestellte Energieversorgungsvorrichtung, insbesondere eine Batterie oder einen Akkumulator, bevorzugt einen Lithium-Ionen-Akkumulator, auf. Ferner weist das Laserentfernungsmessgerät 10 in den Figuren nicht näher dargestellte Komponenten auf. Diese umfassen zumindest eine Recheneinheit zur Berechnung einer Entfernung 28a,28b aus einer Entfernungsmessung sowie zur Berechnung eines indirekt zu bestimmenden Abstands 38 aus Bilddaten zumindest eines aufgenommenen Bildes 34a,34b. Die Recheneinheit ist zur Durchführung des erfindungsgemäßen Verfahrens eingerichtet und vorgesehen.

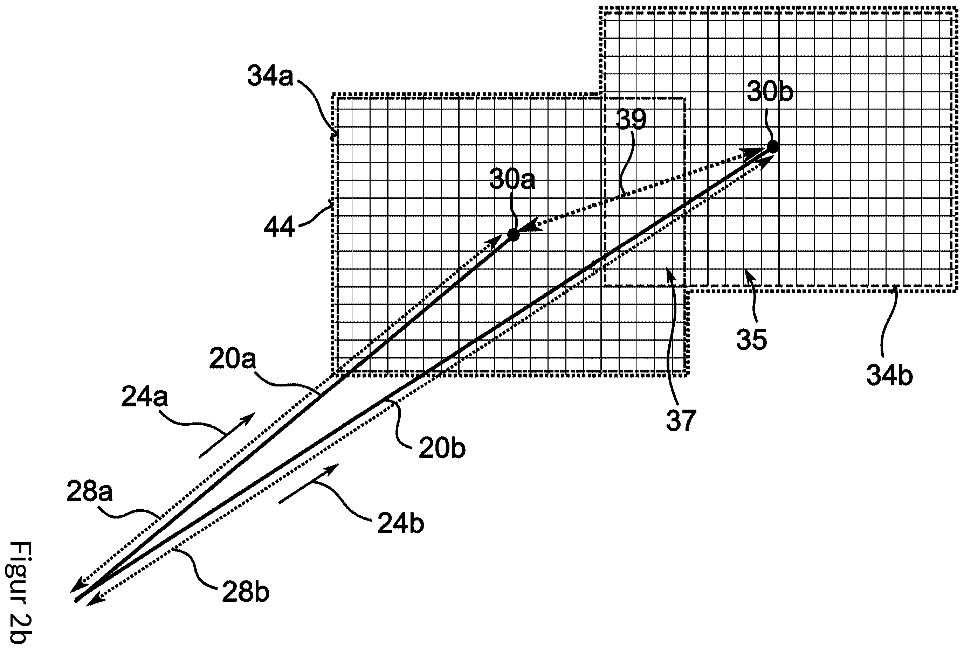

Figur 2a zeigt in schematischer Ansicht eine Messkonstellation, in der das Laserentfernungsmessgerät 10 unter Verwendung der Kamera 32 eingesetzt wird. Figur 2b zeigt in ebenfalls schematischer Ansicht die der Messkonstellation zu Grunde liegende Geometrie. In der gezeigten Ausführungsform befindet sich das Laserentfernungsmessgerät 10 in einem dreidimensionalen Raum. Dabei ist das Laserentfernungsmessgerät 10 derart ausgerichtet, dass die Entfernungsmessrichtung 24a auf das Zielobjekt 18, hier als ein Haus dargestellt, ausgerichtet ist. Ausgehend von diesem Szenario werden im Folgenden die Verfahrensschritte des erfindungsgemäßen Verfahrens sowie deren Ausgestaltung anhand der Figuren 2a, 2b, 3 und 4 erläutert.

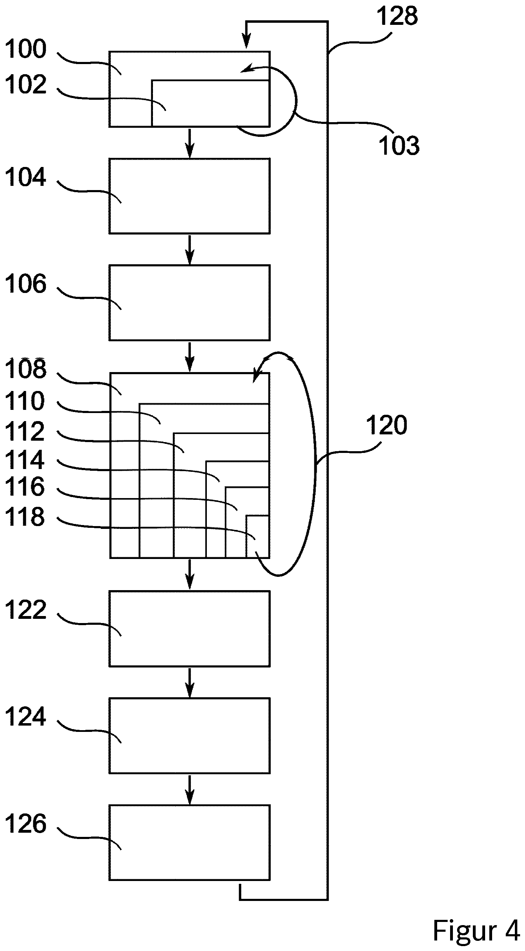

Ein Benutzer des Laserentfernungsmessgeräts 10 ist in dem dargestellten Ausgangsszenario an dem tatsächlichen Abstand 38 zweier Ecken 40a,40b von zwei Fensterrahmen 41a,41b interessiert. Zur Ermittlung des tatsächlichen Abstands 38 auf der Hausfassade zwischen diesen zwei Ecken 40a,40b richtet der Benutzer das Laserentfernungsmessgerät 10 mit dem Laserstrahl 20a in einer freien Bewegung des Laserentfernungsmessgeräts 10 zunächst auf die untere linke Ecke 40a des Fensterahmens 41a aus (Verfahrensschritt 100 in Figur 4). Die freie Bewegung ist in Figur 2a durch einen bidirektionalen Pfeil symbolisiert. Der von dem Laserentfernungsmessgeräts 10 emittierte Laserstrahl 20a erzeugt auf der Oberfläche des Zielobjekts 18 einen ersten Zielpunkt 30a in Form eines gut sichtbaren, roten Lichtpunktes. Gleichzeitig erfasst die Kamera 32 des Laserentfernungsmessgeräts 10 eine Vielzahl von Bildern der jeweiligen Zielumgebung, die auf dem Display 14 des Laserentfernungsmessgeräts 10 kontinuierlich ausgegeben werden und sich daher wie ein Live-Bild bei der Bewegung des Laserentfernungsmessgeräts 10 im Raum verändern (Verfahrensschritt 102 in Figur 4; die kontinuierliche Ausgabe in Form eines Live-Bilds ist in dem Verfahrensdiagramm in Figur 4 durch einen Pfeil mit Bezugszeichen 103 dargestellt).

Es sei nochmals angemerkt, dass die Ausgabe eines Bildes auch die Ausgabe eines Teils eines Bildes, beispielsweise eines vergrößerten Ausschnitts des Bildes, einschließt.

Insbesondere nimmt die Kamera 32 auch das in Figur 2a und 2b dargestellte Bild 34a der ersten Zielumgebung 36a um den ersten Zielpunkt 30a herum auf. Das von der Kamera 32 aufgenommene Bild 34a ist in den Figuren 2a und 2b über eine punktgestrichelte Linie dargestellt.

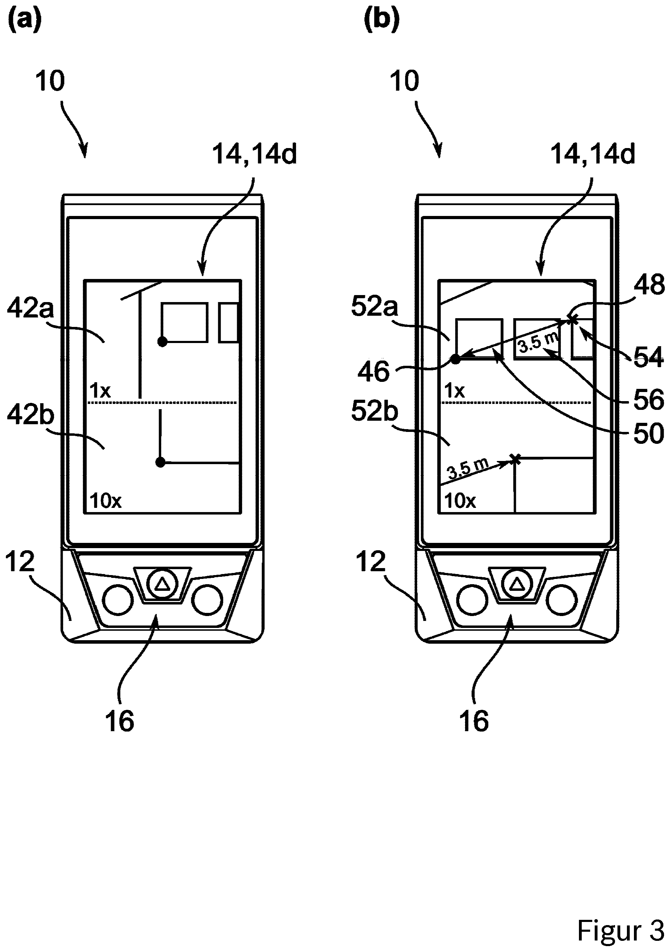

Auf dem Display 14 des Laserentfernungsmessgeräts 10 wird zu diesem Zeitpunkt die in Figur 3a wiedergegebene Darstellung abgebildet. Über das Display 14 des Laserentfernungsmessgeräts 10 werden zeitgleich in der in Figur 3a dargestellten Ausführungsform zwei Bilder 42a,42b der Zielumgebung 36a an den Benutzer ausgegeben. In der oberen Hälfte des Displays 14 wird ein unvergrößertes Bild 42a des mittels der Kamera 32 aufgenommenen Bildes 34a der ersten Zielumgebung 36a ausgegeben. Die Skalierung ist in dem ausgegebenen Bild 42a gekennzeichnet durch den Schriftzug "1x". In diesem Display-Bild 42a sieht der Benutzer einen Ausschnitt des Zielobjekts 18 und den in der Mitte des Bildes 42a dargestellten, auf das Zielobjekt 18 projizierten Zielpunkt 30a. Bevorzugt kann dieser Zielpunkt 30a auch durch ein Symbol überlagert repräsentiert werden. In der unteren Hälfte der mittels des Displays 14 ausgegebenen Darstellung in Figur 3a ist ein vergrößertes Bild 42b des mittels der Kamera 32 aufgenommenen Bildes 34a der ersten Zielumgebung 36a wiedergegeben. Exemplarisch weist das ausgegebene Bild 42b in dieser Darstellung eine Vergrößerung von 10-fach auf, gekennzeichnet durch den Schriftzug "10x". Der Benutzer kann diesem ausgegebenen Bild 42b eine vergrößerte Darstellung des in der oberen Hälfte des Displays 14 dargestellten Bildes 42a entnehmen. Eine genaue Ausrichtung des emittierten Laserstrahls 20a auf die untere linke Ecke 40a des Fensterrahmens 41a ist mittels der Ausgabe des zweiten, vergrößerten Bildes 42b möglich (in der unteren Darstellung ist die präzise Ausrichtung erreicht, der Zielpunkt 30a liegt exakt auf der Ecke 40a des Fensterrahmens 41a).

Nach Anvisieren des ersten Zielpunktes 30a mit dem Laserentfernungsmessgerät 10 initiiert der Benutzer des Laserentfernungsmessgeräts 10 durch Betätigung eines Bedienelements 16 (Verfahrensschritt 104 in Figur 4) die Ermittlung einer ersten Entfernung 28a zwischen dem Laserentfernungsmessgerät 10 und dem ersten Zielpunkt 30a (Verfahrensschritt 106 in Figur 4). Die gemessene Entfernung 28a wird der Steuervorrichtung des Laserentfernungsmessgeräts 10 zur weiteren Verarbeitung zur Verfügung gestellt. Fortan werden nach Betätigen des Bedienelements 16 alle weiteren Messungen, insbesondere die Ermittlung des indirekten Abstands 38 und eine Auswertung von aufgenommenen Bilddaten, auf den ersten Zielpunkt 30a bezogen.

Der Benutzer bewegt nun das Laserentfernungsmessgerät 10 derart frei im dreidimensionalen Raum (Verfahrensschritt 108), dass der emittierte Laserstrahl 20b sich in Richtung der zweiten Ecke 40b des Fensterrahmens 41b hin bewegt. Dabei überstreicht der emittierte Laserstrahl 20b, insbesondere der auf die Oberfläche des Zielobjektes 18 projizierte Zielpunkt 30b, die Oberfläche des Zielobjekts 18 in Richtung auf die zweite Ecke 40b des Fensterrahmens 41b hin. Während der freien Bewegung des Laserentfernungsmessgeräts 10 im Raum nimmt die Kamera 32 sukzessiv Bilder 34b auf (hier zur Veranschaulichung nur ein weiteres Bild 34b statt einer Vielzahl von Bildern), die auf dem Display 14 des Laserentfernungsmessgeräts 10 an den Benutzer als ein "Live-Bild" der jeweilig anvisierten Zielumgebung 36b ausgegeben werden (Verfahrensschritt 110). Das von der Kamera 32 aufgenommene Bild 34b ist in den Figuren 2a und 2b durch eine gestrichelte Linie dargestellt. Die zeitliche Frequenz, mit der diese Bilder und auch Bild 34b aufgenommen werden, ist derart hoch, dass jeweils nacheinander aufgenommene Bilder 34b zumindest einen überlappenden Bildbereich 37 aufweisen (vgl. Figur 2a, 2b). In diesem Ausführungsbeispiel beträgt die Frequenz, mit der die Kamera 32 Bilder 34a,34b aufnimmt, 50 Hz. Auf diese Weise kann sichergestellt werden, dass jeweils aufeinanderfolgend aufgenommene Bilder 34a,34b (oder anders ausgedrückt: jeweils benachbarte Bilder 34a,34b) zumindest einen gemeinsamen Bildbereich 37 aufweisen.

Aus den aus diesen Bildern 34a,34b gewonnenen Bilddaten, d. h. aus der Gesamtheit der durch die Kamera 32 aufgenommenen Bilder 34a,34b, kann unter Verwendung der Recheneinheit eine umfassende Auswertung erfolgen (Verfahrensschritte 112 bis 118). Insbesondere werden mittels der Recheneinheit die Bilder 34a,34b derart verarbeitet, dass sie durch Abstimmen des gemeinsamen Bildbereichs 37 jeweils in Beziehung zueinander gesetzt werden (Verfahrensschritt 112). Auf diese Weise wird ein Panoramabild 44 zusammengesetzt, das aus mindestens einem von der Kamera 32 aufgenommenen Bild, bevorzugt aus mehreren von der Kamera 32 aufgenommenen Bildern (hier zwei Bilder 34a,34b), besteht. Das Panoramabild 44 ist in den Figuren 2a und 2b durch eine gepunktete Linie dargestellt.

Wie in Figur 2b dargestellt ist, liegt dem Panoramabild 44 ein Pixel-Raster 35 zu Grunde oder ein Pixel-Raster 35 wird zu Grunde gelegt. Diese Pixel-Raster 35 entspricht in dem dargestellten Ausführungsbeispiel der von der Optik und dem CMOS-Chip der Kamera 32 definierten Winkelauflösung des Laserentfernungsmessgeräts 10. Durch Auswertung von Pixeln, d.h. insbesondere durch Markierung desjenigen Pixels, der in dem ersten Bild 34a den ersten Zielpunkt 30a markiert, sowie desjenigen Pixels, der in dem zuletzt aufgenommenen Bild 34b den aktuell anvisierten Zielpunkt 30b auf dem Zielobjekt 18 markiert, kann der Anfangspunkt 46 und der Endpunkt 48 einer darzustellenden Verbindungslinie 50 ermittelt werden (Verfahrensschritt 114).

Unter Verwendung der zu dem ersten Zielpunkt 30a gemessenen ersten Entfernung 28a sowie des aus zueinander in Beziehung gesetzten Bildern 34a,34b ermittelten Pixel-Abstands 39 (vgl. Figur 2b) des ersten Zielpunkts 30a zum zweiten anvisierten Zielpunkt 30b kann unter Anwendung des Cosinussatzes der tatsächliche Abstand 38 des ersten Zielpunkts 30a zu dem anvisierten zweiten Zielpunkt 30b bestimmt werden (Verfahrensschritt 116). Alternativ oder zusätzlich kann die Berechnung des Abstands 38 des ersten Zielpunkts 30a zum zweiten, anvisierten Zielpunkt 30b unter Verwendung des aus zueinander in Beziehung gesetzten Bildern 34a,34b ermittelten Pixel-Abstands 39 des ersten Zielpunkts 30a zum zweiten anvisierten Zielpunkt 30b sowie unter Verwendung der ersten Entfernung 28a sowie einer weiteren Entfernung 28b in Richtung des anvisierten, zweiten Zielpunkts 30b erfolgen. Insbesondere kann auf diese Weise eine größere Genauigkeit des berechneten, indirekt gemessenen Abstands 38 zwischen dem ersten Zielpunkt 30a und dem zweiten Zielpunkt 30b auf der Oberfläche des Zielobjekts 18 erreicht werden.

Die während des Bewegens des Laserentfernungsmessgeräts 10 im dreidimensionalen Raum an den Benutzer ausgegebene Darstellung auf dem Display 14 ist in Figur 3b dargestellt. Die Darstellung auf dem Display 14 umfasst wiederum zwei Bilder 52a,52b. Analog zu der Beschreibung zu Figur 3a wird in Figur 3b in der oberen Hälfte des Displays 14 wieder ein unvergrößertes Bild 52a ausgegeben (Skalierung "1x"), in der unteren Hälfte des Displays 14 ein zehnfach vergrößertes Bild 52b (Skalierung "10x"). An dieser Stelle gelten die gleichen Erklärungen zu der Nützlichkeit der Darstellung in unterschiedlichen Skalierungen wie bereits zu Figur 3a ausgeführt. Mit den Bildern 52a,52b überlagert wird zumindest ein Teil einer Verbindungslinie 50 an den Benutzer ausgegeben, wobei die Verbindungslinie 50 den ersten Zielpunkt 30a und den zweiten, anvisierten Zielpunkt 30b in dem ausgegebenen Bild 52a,52b verbindet (Verfahrensschritt 118).

Die Darstellung der Bilder 52a,52b des Kamerabilds 34b auf dem Display 14 erfolgt während der Bewegung des Laserentfernungsmessgeräts 10 im dreidimensionalen Raum in Echtzeit synchron zu der Bewegung des Laserentfernungsmessgeräts 10. Insbesondere werden die ausgegebenen Bilder 52a,52b mit einer derart hohen Wiederholungsrate aktualisiert (in Figur 4 dargestellt durch den Pfeil mit Bezugszeichen 120), dass dem Benutzer des Laserentfernungsmessgeräts 10 die Ausgabe auf dem Display 14 wie ein "Livebild" vorkommt. Gleichzeitig wird die mit der den Bildern 52a,52b überlagert ausgegebene Verbindungslinie 50 entsprechend schnell aus den Bilddaten und der gemessenen Entfernung 28a zu dem ersten Zielpunkt 30a berechnet und ebenfalls dargestellt.

Vorteilhaft erscheint dem Benutzer die Verbindungslinie 50 während der Bewegung des Laserentfernungsmessgeräts 10 im dreidimensionalen Raum wie ein zwischen dem ersten Zielpunkt 30a und dem zweiten, anvisierten Zielpunkt 30b gespanntes Gummiband. Der zweite, anvisierte Zielpunkt 30b wird in der Darstellung 52a,52b in der Figur 3b über ein Kreuz als symbolische Markierung 54 des zweiten Zielpunktes 30b dargestellt. Mit der Darstellung der Verbindungslinie 50 wird gleichzeitig die Länge 56 der Verbindungslinie 50, insbesondere der durch diese Verbindungslinie 50 repräsentierte Abstand des ersten Zielpunkts 30a und des zweiten, anvisierten Zielpunkts 30b auf der Oberfläche des Zielobjekts 18, an den Benutzer ausgegeben. In der Figur in 3b beträgt der ausgegebene numerische Wert dieses Abstands 38 "3.5 m". Mit der Bewegung des Laserentfernungsmessgeräts 10 im dreidimensionalen Raum verändert sich die Verbindungslinie 50 kontinuierlich. Gleichzeitig wird die Länge der Verbindungslinie 50 kontinuierlich bestimmt und als numerischer Zahlenwert 56 ausgegeben. In dem dargestellten Ausführungsbeispiel wird die Länge als ein numerischer Wert 56 unmittelbar neben, insbesondere oberhalb oder unterhalb der Verbindungslinie 50, dargestellt.

Hat der Benutzer des Laserentfernungsmessgeräts 10 mit der Ausrichtung des Laserentfernungsmessgerätes auf den zweiten, anvisierten Zielpunkt 30b die gewünschte Position auf der Oberfläche des Zielobjekts 18 erreicht, betätigt der Benutzer erneut ein Bedienelement 16 (Verfahrensschritt 122). In Folge der Betätigung des Bedienelements 16 werden die mittels des Displays 14 dargestellten Display-Bilder 52a,52b eingefroren (Verfahrensschritt 124). Auch bei weiterer Bewegung des Laserentfernungsmessgeräts 10 im dreidimensionalen Raum verändert sich die ausgegebene Darstellung, d.h. die Display-Bilder 52a,52b, die Verbindungslinie 50 sowie der dargestellte numerische Wert 56 für den ermittelten Abstand 38 nicht mehr. Abschließend kann das Messergebnis inklusiv der ausgegebenen Bilder 52a,52b unter Verwendung der Betätigungselemente 16 abgespeichert werden (Verfahrensschritt 126).

Im Anschluss an die durchgeführte Messung kann das Verfahren erneut begonnen werden. Dies ist in Figur 4 durch den Pfeil 128 dargestellt.

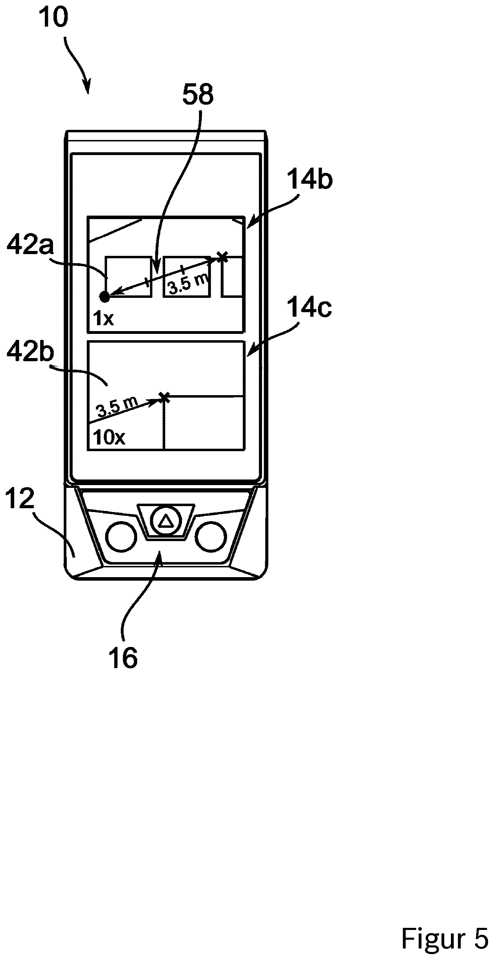

In der in Figur 5 dargestellten weiteren Ausführungsform des Laserentfernungsmessgeräts 10 kann die Verbindungslinie 50 als ein untergliederter Maßstab 58 ausgegeben werden. Die Untergliederung des Maßstabs erlaubt dem Benutzer des Laserentfernungsmessgeräts 10 eine vereinfachte Abschätzung von Abständen auf der Oberfläche des Zielobjekts 18.

Ebenfalls kann die Ausgabe der Bilder 42a,42b bzw. 52a,52b (hier in Figur 5 der Display-Bilder 42a,42b) an den Benutzer auch unter Verwendung von zweit Displays 14b und 14c erfolgen, wie dies in der in Figur 5 dargestellten Ausführungsform des Laserentfernungsmessgeräts 10 realisiert ist.

## Patentansprüche

1. Verfahren zum Betrieb eines Laserentfernungsmessgeräts (10), insbesondere eines handgehaltenen Laserentfernungsmessgeräts (10), bei dem mit einer Laserentfernungsmesseinheit des Laserentfernungsmessgeräts (10) eine erste Entfernung (28a) zu einem ersten Zielpunkt (30a) durch Aussenden eines Laserstrahls (20a) in einer ersten Entfernungsmessrichtung (24a) ermittelt wird und anschließend zumindest eine zweite Entfernung (28b) zu einem zweiten, anvisierten Zielpunkt (30b) ermittelt wird, wobei während des Anvisierens des zweiten Zielpunkts kontinuierlich ein mittels einer Kamera (32) des Laserentfernungsmessgeräts (10) aufgenommenes Bild (34b,52a,52b) zumindest der Zielumgebung (36b) des zweiten Zielpunkts (30b) auf einem Display (14) des Laserentfernungsmessgeräts (10) ausgegeben wird, wobei mit dem Bild (34b,52a,52b) überlagert zumindest ein Teil einer Verbindungslinie (50) dargestellt wird, die den ersten Zielpunkt (30a) und den zweiten Zielpunkt (30b) in dem ausgegebenen Bild (34b,52a,52b) verbindet, **dadurch gekennzeichnet, dass** die Darstellung des Bildes (34b,52a,52b) überlagert mit der Verbindungslinie (50) zwischen dem ersten Zielpunkt (30a) und dem zweiten Zielpunkt (30b) in Echtzeit synchron zu einer Bewegung des Laserentfernungsmessgeräts (10) erfolgt.

2. Verfahren zum Betrieb eines Laserentfernungsmessgeräts (10) nach Anspruch 1, wobei der Anfangspunkt (46) und der Endpunkt (48) der darzustellenden Verbindungslinie (50) unter Verwendung einer Serie von Bildern (34a,34b) berechnet wird, die zumindest ein erstes Bild (34a) einer Zielumgebung (36a) des ersten Zielpunkts (30a) und zumindest ein zweites Bild (34b) einer Zielumgebung (36b) des zweiten Zielpunkts (30b) aufweist, wobei zumindest benachbarte Bilder (34a,34b) jeweils mindestens einen gemeinsamen Bildbereich (37) aufweisen.

3. Verfahren zum Betrieb eines Laserentfernungsmessgeräts (10) nach einem der Ansprüche 1-2, wobei der Abstand (38) des ersten Zielpunkts (30a) zum zweiten Zielpunkt (30b) unter Verwendung eines aus zueinander in Beziehung gesetzten Bildern (34a,34b) ermittelten Pixel-Abstands (39) des ersten Zielpunkts (30a) zum zweiten Zielpunkt (30b) sowie unter Verwendung der ersten Entfernung (28a) berechnet wird.

4. Verfahren zum Betrieb eines Laserentfernungsmessgeräts (10) nach einem der Ansprüche 1-3, wobei der Abstand (38) des ersten Zielpunkts (30a) zum zweiten Zielpunkt (30b) unter Verwendung eines aus zueinander in Beziehung gesetzten Bildern (34a,34b) ermittelten Pixel-Abstands (39) des ersten Zielpunkts (30a) zum zweiten Zielpunkt (30b) sowie unter Verwendung der ersten Entfernung (28a) und der zweiten Entfernung (28b) berechnet wird.

5. Verfahren zum Betrieb eines Laserentfernungsmessgeräts (10) nach einem der Ansprüche 1-4, wobei der Abstand (38) des ersten Zielpunkts (30a) zum zweiten Zielpunkt (30b) durch eine Länge der dargestellten Verbindungslinie (50) zwischen dem ersten Zielpunkt (30a) und dem zweiten Zielpunkt (30b) auf dem Display (14) repräsentiert wird, insbesondere in Echtzeit synchron zu einer Bewegung des Laserentfernungsmessgeräts (10) auf dem Display (14) dargestellt wird, vorzugsweise als numerischer Wert (56) dargestellt wird.

6. Verfahren zum Betrieb eines Laserentfernungsmessgeräts (10) nach einem der Ansprüche 1-5, wobei die Ausgabe des Bilds (34b,52a,52b) zumindest der Zielumgebung (36b) des zweiten Zielpunkts (30b) überlagert mit der Verbindungslinie (50) zwischen dem ersten Zielpunkt (30a) und dem zweiten Zielpunkt (30b) und/oder die dargestellte Länge der Verbindungslinie (50) auf dem Display (14) in Folge einer Benutzereingabe eingefroren wird.

7. Verfahren zum Betrieb eines Laserentfernungsmessgeräts (10) nach einem der Ansprüche 1-5, wobei die Verbindungslinie (50) als ein untergliederter Maßstab (58) dargestellt wird.

8. Verfahren zum Betrieb eines Laserentfernungsmessgeräts (10) nach einem der Ansprüche 1-6, wobei das Bild (34b,52a,52b) auf dem Display (14) überlagert mit der Verbindungslinie (50) zwischen dem ersten Zielpunkt (30a) und dem zweiten Zielpunkt (30b) in zumindest zwei verschiedenen Skalierungen ausgegeben wird, insbesondere zeitgleich ausgegeben wird.

9. Verfahren zum Betrieb eines Laserentfernungsmessgeräts (10) nach einem der Ansprüche 1-7, wobei der erste Zielpunkt (30a) und/oder der zweite Zielpunkt (30b) in dem dargestellten Bild (34b,52a,52b) markiert wird, insbesondere mittels eines Symbols (54) markiert wird.

10. Laserentfernungsmessgerät (10), insbesondere handgehaltenes Laserentfernungsmessgerät (10), eingerichtet zur Durchführung eines Verfahrens nach einem der Ansprüche 1 bis 9, aufweisend zumindest eine Laserentfernungsmesseinheit zum berührungslosen Messen einer Entfernung (28a,28b) zu einem Zielpunkt (30a,30b), zumindest eine in Entfernungsmessrichtung (24) ausgerichtete Kamera (32) zur Aufnahme zumindest eines Bildes (34a,34b) einer Zielumgebung (36a,36b) des Zielpunkts (30a,30b), zumindest eine Recheneinheit zur Berechnung einer Entfernung (28a,28b) aus einer Entfernungsmessung mittels der Laserentfernungsmesseinheit sowie zur Berechnung eines Abstands (38) zwischen einem ersten Zielpunkt (30a) und einem zweiten Zielpunkt (30b) aus Bilddaten zumindest eines aufgenommenen Bildes (34a,34b), und ein Display (14), wobei mittels des Displays (14) ein mit der Kamera (32) erfasstes Bild (34b,52a,52b) überlagert mit zumindest einem Teil einer Verbindungslinie (50) darstellbar ist, die den ersten Zielpunkt (30a) und den zweiten Zielpunkt (30b) in dem ausgegebenen Bild (34b,52a,52b) verbindet, wobei die Darstellung des Bildes (34b,52a,52b) überlagert mit der Verbindungslinie (50) zwischen dem ersten Zielpunkt (30a) und dem zweiten Zielpunkt (30b) in Echtzeit synchron zu einer Bewegung des Laserentfernungsmessgeräts (10) erfolgt.

11. Laserentfernungsmessgerät (10) nach Anspruch 10, wobei zur Ausgabe des Bilds (34b,52a,52b) überlagert mit der Verbindungslinie (50) zwischen dem ersten Zielpunkt (30a) und dem zweiten Zielpunkt (30b) in zwei verschiedenen Skalierungen zwei Displays (14b,14c) und/oder ein zweiteiliges Display (14d) vorgesehen ist.

## Claims

1. Method for operating a laser distance measuring device (10), in particular a handheld laser distance measuring device (10), wherein, by means of a laser distance measuring unit of the laser distance measuring device (10), a first distance (28a) to a first target point (30a) is determined by emitting a laser beam (20a) in a first distance measuring direction (24a) and then at least one second distance (28b) to a second, sighted target point (30b) is determined, wherein an image (34b, 52a, 52b) at least of the target environment (36b) of the second target point (30b), which image is recorded by means of a camera (32) of the laser distance measuring device (10), is output on a display (14) of the laser distance measuring device (10) continuously during the sighting of the second target point, wherein at least one part of a connecting line (50) connecting the first target point (30a) and the second target point (30b) in the image (34b, 52a, 52b) that is output is represented in a manner superimposed with the image (34b, 52a, 52b), **characterized in that** the representation of the image (34b, 52a, 52b) in a manner superimposed with the connecting line (50) between the first target point (30a) and the second target point (30b) takes place in real time synchronously with a movement of the laser distance measuring device (10).

2. Method for operating a laser distance measuring device (10) according to Claim 1, wherein the start point (46) and the end point (48) of the connecting line (50) to be represented are calculated using a series of images (34a, 34b) comprising at least one first image (34a) of a target environment (36a) of the first target point (30a) and at least one second image (34b) of a target environment (36b) of the second target point (30b), wherein at least adjacent images (34a, 34b) have in each case at least one common image region (37).

3. Method for operating a laser distance measuring device (10) according to either of Claims 1-2, wherein the spacing (38) between the first target point (30a) and the second target point (30b) is calculated using a pixel spacing (39) between the first target point (30a) and the second target point (30b), said pixel spacing being determined from images (34a, 34b) related to one another, and also using the first distance (28a).

4. Method for operating a laser distance measuring device (10) according to any of Claims 1-3, wherein the spacing (38) between the first target point (30a) and the second target point (30b) is calculated using a pixel spacing (39) between the first target point (30a) and the second target point (30b), said pixel distance being determined from images (34a, 34b) related to one another, and also using the first distance (28a) and the second distance (28b).

5. Method for operating a laser distance measuring device (10) according to any of Claims 1-4, wherein the spacing (38) between the first target point (30a) and the second target point (30b) is represented by a length of the represented connecting line (50) between the first target point (30a) and the second target point (30b) on the display (14), in particular is represented in real time synchronously with a movement of the laser distance measuring device (10) on the display (14), preferably is represented as a numerical value (56).

6. Method for operating a laser distance measuring device (10) according to any of Claims 1-5, wherein the outputting of the image (34b, 52a, 52b) at least of the target environment (36b) of the second target point (30b) in a manner superimposed with the connecting line (50) between the first target point (30a) and the second target point (30b) and/or the represented length of the connecting line (50) on the display (14) are/is frozen on account of a user input.

7. Method for operating a laser distance measuring device (10) according to any of Claims 1-5, wherein the connecting line (50) is represented as a subdivided scale (58) .

8. Method for operating a laser distance measuring device (10) according to any of Claims 1-6, wherein the image (34b, 52a, 52b) is output, in particular is output simultaneously, on the display (14) in a manner superimposed with the connecting line (50) between the first target point (30a) and the second target point (30b) in at least two different scalings.

9. Method for operating a laser distance measuring device (10) according to any of Claims 1-7, wherein the first target point (30a) and/or the second target point (30b) are/is marked, in particular marked by means of a symbol (54), in the represented image (34b, 52a, 52b).

10. Laser distance measuring device (10), in particular handheld laser distance measuring device (10), configured for carrying out a method according to any of Claims 1 to 9, comprising at least one laser distance measuring unit for non-contact measurement of a distance (28a, 28b) to a target point (30a, 30b), at least one camera (32) aligned in the distance measuring direction (24) for recording at least one image (34a, 34b) of a target environment (36a, 36b) of the target point (30a, 30b), at least one computing unit for calculating a distance (28a, 28b) from a distance measurement by means of the laser distance measuring unit and for calculating a spacing (38) between a first target point (30a) and a second target point (30b) from image data of at least one recorded image (34a, 34b), and a display (14), wherein, by means of the display (14), an image (34b, 52a, 52b) captured by the camera (32) is representable in a manner superimposed with at least one part of a connecting line (50) connecting the first target point (30a) and the second target point (30b) in the image (34b, 52a, 52b) that is output, wherein the representation of the image (34b, 52a, 52b) in a manner superimposed with the connecting line (50) between the first target point (30a) and the second target point (30b) takes place in real time synchronously with a movement of the laser distance measuring device (10).

11. Laser distance measuring device (10) according to Claim 10, wherein for outputting the image (34b, 52a, 52b) in a manner superimposed with the connecting line (50) between the first target point (30a) and the second target point (30b) in two different scalings, provision is made of two displays (14b, 14c) and/or a bipartite display (14d).

## Revendications

1. Procédé pour faire fonctionner un télémètre laser (10), notamment un télémètre laser (10) tenu à la main, avec lequel une première distance (28a) par rapport à un premier point cible (30a) est déterminée avec une unité de télémétrie laser du télémètre laser (10) en émettant un rayon laser (20a) dans une première direction de mesure de distance (24a) et au moins une deuxième distance (28b) par rapport à un deuxième point cible (30b) visé est ensuite déterminée, une image (34b, 52a, 52b) d'au moins l'environnement de cible (36b) du deuxième point cible (30b), capturée au moyen d'une caméra (32) du télémètre laser (10), étant continuellement délivrée sur un dispositif d'affichage (14) du télémètre laser (10) pendant la visée du deuxième point cible, au moins une partie d'une ligne de liaison (50) étant représentée superposée à l'image (34b, 52a, 52b), laquelle relie le premier point cible (30a) et le deuxième point cible (30b) dans l'image (34b, 52a, 52b) délivrée, **caractérisé en ce que** la représentation de l'image (34b, 52a, 52b) à laquelle est superposée la ligne de liaison (50) entre le premier point cible (30a) et le deuxième point cible (30b) s'effectue en temps réel de manière synchrone avec un mouvement du télémètre laser (10) .

2. Procédé pour faire fonctionner un télémètre laser (10) selon la revendication 1, le point de départ (46) et le point final (48) de la ligne de liaison (50) à représenter étant calculés en utilisant une série d'images (34a, 34b), laquelle présente au moins une première image (34a) d'un environnement de cible (36a) du premier point cible (30a) et au moins une deuxième image (34b) d'un environnement de cible (36b) du deuxième point cible (30b), au moins des images voisines (34a, 34b) présentant respectivement au moins une zone d'image commune (37).

3. Procédé pour faire fonctionner un télémètre laser (10) selon l'une des revendications 1 à 2, l'écart (38) entre le premier point cible (30a) et le deuxième point cible (30b) étant calculé en utilisant un écart entre pixels (39) du premier point cible (30a) par rapport au deuxième point cible (30b), déterminé à partir d'images (34a, 34b) mises en relation entre elles, ainsi qu'en utilisant la première distance (28a).

4. Procédé pour faire fonctionner un télémètre laser (10) selon l'une des revendications 1 à 3, l'écart (38) entre le premier point cible (30a) et le deuxième point cible (30b) étant calculé en utilisant un écart entre pixels (39) du premier point cible (30a) par rapport au deuxième point cible (30b), déterminé à partir d'images (34a, 34b) mises en relation entre elles, ainsi qu'en utilisant la première distance (28a) et la deuxième distance (28b).

5. Procédé pour faire fonctionner un télémètre laser (10) selon l'une des revendications 1 à 4, l'écart (38) entre le premier point cible (30a) et le deuxième point cible (30b) étant représenté sur le dispositif d'affichage (14) par une longueur de la ligne de liaison (50) représentée entre le premier point cible (30a) et le deuxième point cible (30b), notamment représenté sur le dispositif d'affichage (14) en temps réel de manière synchrone avec un mouvement du télémètre laser (10), de préférence représenté sous la forme d'une valeur numérique (56).

6. Procédé pour faire fonctionner un télémètre laser (10) selon l'une des revendications 1 à 5, à la délivrance de l'image (34b, 52a, 52b) d'au moins l'environnement de cible (36b) du deuxième point cible (30b) étant superposée la ligne de liaison (50) entre le premier point cible (30a) et le deuxième point cible (30b) et/ou la longueur représentée de la ligne de liaison (50) étant figée sur le dispositif d'affichage (14) en conséquence d'une entrée de l'utilisateur.

7. Procédé pour faire fonctionner un télémètre laser (10) selon l'une des revendications 1 à 5, la ligne de liaison (50) étant représentée sous la forme d'une échelle subdivisée (58).

8. Procédé pour faire fonctionner un télémètre laser (10) selon l'une des revendications 1 à 6, l'image (34b, 52a, 52b) étant délivrée sur le dispositif d'affichage (14) superposée par la ligne de liaison (50) entre le premier point cible (30a) et le deuxième point cible (30b) en au moins deux mises à l'échelle différentes, notamment délivrée simultanément.

9. Procédé pour faire fonctionner un télémètre laser (10) selon l'une des revendications 1 à 7, le premier point cible (30a) et/ou le deuxième point cible (30b) étant marqués dans l'image (34b, 52a, 52b) représentée, notamment marqués au moyen d'un symbole (54).

10. Télémètre laser (10), notamment télémètre laser (10) tenu à la main, conçu pour mettre en œuvre un procédé selon l'une des revendications 1 à 9, possédant au moins une unité de télémétrie laser destinée à la mesure sans contact d'une distance (28a, 28b) par rapport à un point cible (30a, 30b), au moins une caméra (32) orientée dans la direction de mesure de distance (24) et destinée à capturer au moins une image (34a, 34b) d'un environnement de cible (36a, 36b) du point cible (30a, 30b), au moins une unité de calcul destinée à calculer une distance (28a, 28b) à partir d'une mesure de distance au moyen de l'unité de télémétrie laser ainsi qu'à calculer un écart (38) entre un premier point cible (30a) et un deuxième point cible (30b) à partir des données d'image d'au moins une image (34a, 34b) capturée, et un dispositif d'affichage (14), une image (34b, 52a, 52b), capturée avec la caméra (32) et à laquelle est superposée au moins une partie d'une ligne de liaison (50) qui relie le premier point cible (30a) et le deuxième point cible (30b) dans l'image (34b, 52a, 52b) délivrée, pouvant être représentée au moyen du dispositif d'affichage (14), la représentation de l'image (34b, 52a, 52b) à laquelle est superposée la ligne de liaison (50) entre le premier point cible (30a) et le deuxième point cible (30b) s'effectuant en temps réel de manière synchrone avec un mouvement du télémètre laser (10).

11. Télémètre laser (10) selon la revendication 10, deux dispositifs d'affichage (14b, 14c) et/ou un dispositif d'affichage en deux parties (14d) étant présents pour la délivrance de l'image (34b, 52a, 52b) à laquelle est superposée la ligne de liaison (50) entre le premier point cible (30a) et le deuxième point cible (30b) dans deux mises à l'échelle différentes.
